# EUROPEAN PATENT SPECIFICATION

(11) **EP 3 736 508 B1**
(45) Date of publication and mention of the grant of the patent: **30.03.2022**
(21) Application number: 19382361.4
(22) Date of filing: 09.05.2019
(51) Int. Cl.: F24S 20/20

(54) **ASYMMETRIC SOLAR RECEIVER**
ASYMMETRISCHER SOLAREMPFÄNGER
RÉCEPTEUR SOLAIRE ASYMÉTRIQUE

(43) Date of publication of application: 11.11.2020
(73) Proprietor: C DOS CONSULTING & ENGINEERING, S.L., 28320 Pinto (Madrid) (ES)
(72) Inventor: Carrascosa Pérez, Marco Antonio, 28320 Pinto (Madrid) (ES)
(74) Representative: Temiño Ceniceros, Ignacio

(56) References cited:
- FR-A1- 2 438 804
- JP-A- 2013 253 762
- US-A1- 2011 232 629
- US-A1- 2012 192 857
- US-A1- 2013 220 303
- FRICKER H W: "30-MW-DEMONSTRATIONS - SONNENKRAFTWERK - EINE STUDIE", REVUE TECHNIQUE SULZER, SULZER FRERES S.A. WINTERTHUR, CH, vol. 71, no. 3, 1 January 1989 (1989-01-01), pages 9-14, XP000085715,

## Description

### FIELD OF THE INVENTION

The present invention relates to the technical field of thermodynamic concentrating solar power (CSP) technologies, concentrating solar power plants and, specifically, solar power tower concentrating technologies.

### BACKGROUND OF THE INVENTION

Concentrating solar power (CSP) technology is an important alternative for providing clean and renewable electricity generation. CSP uses the heat of the sun, unrestricted and daily available energy source, that allows to reduce the greenhouse gas emissions in approximately 1 kg for each kW of electricity generated. The easy management, the dispatchability and the capacity to be adapted to the electric market demand makes CSP the most interesting technology among the renewable technologies and competitive with the fossil fuel power plants. Currently, there are four main CSP technologies, which are parabolic trough technology (PTC), linear Fresnel collector (LFC), Stirling/dish systems (SDC), and solar power tower (SPT), also known as central receiver technology.

Solar tower power technology is mainly based on a tower to receive the focused sunlight. It uses an array of flat, movable mirrors (called heliostats) to focus the sunrays upon a collector tower (the target). Early designs of tower power systems used these focused rays to heat water and to power a turbine through the resulting steam. Newer designs use liquid sodium or other molten salts (as 40% potassium nitrate and 60% sodium nitrate mixture) as working fluids due to their high heat capacity, which can be used to store the energy before using it to boil water to drive turbines. These designs also allow power to be generated when the sun is not shining.

Molten-salt tower solar plants use a field of distributed heliostats that individually track the sun and focus the sunlight on the top of a tower by concentrating the sunlight to achieve temperatures up to 600° C. The receiver system is thus the interface for which the energy passes from the field collector to the thermal electric cycle and represents, therefore, the core of the SPT and its performance directly affects the plant production.

The heliostats are normally slightly concave mirrors that follow the sun with a two-axis tracking. Depending on the arrangement of the heliostats with respect to the receiver, there are two different heliostat field configurations. If the receiver adopts a vertical orientation or if it is enclosed in a cavity, the heliostats are normally located in the north of the receiver, configuring a north field (for plants installed in the northern hemisphere). However, if the receiver is cylindrical (as happens for large tower solar plants with large number of heliostats) the heliostat field must be located around the tower, configuring one or more circular fields. The aim of these configurations, together with interlard between heliostat rows, is to reduce the blocking and shading effects of the heliostats in order to improve the optical efficiency and hence reduce the solar field cost. Although the operation of the heliostat field is globally well understood in the art, the specific design of the heliostat field is critical and it represents around 45% of the total cost of the SPT. However, it cannot be studied alone, due to the receiver size and its limitations affect the heliostat calculations. Thus, receiver and heliostat fields must be studied together to maximize the outfit thermal efficiency and minimize the heliostat field costs (see, for example, "On the design of solar external receivers", M.R. Rodriguez, 2015).

The external central receiver is placed at the top of the tower, usually configured as a 360° cylindrical tubular receiver made of panels (for large tower power plants), where vertical thin-walled tubes are arranged. Depending on the flow path configuration, the molten salt can enter by one or two panels, using a combination of up-flow and down-flow panels. The receiver is not extremely expensive compared with the total cost of the plant, around 17%. However, it is the most critical element due to its extreme working conditions. It receives high incident solar flux in the external face of the tubes, while in the internal side the fluid inside the tube is at lower temperature. Therefore, to ensure the proper life of the receivers is one of the most important goal in the design of SPT. The design of this kind of receiver is not easy due to the instability of the solar flux and the large size of heliostats and receiver make extremely difficult to determine the spatial heat flux distribution on the receiver tubes. Hence, the exact control of the temperature distribution is even harder.

The efficient use of solar energy for high temperature processes, such as conversion to electricity via Brayton cycle or other thermodynamic processes, requires concentrating said energy to a high level. The main reason is that, at high temperatures, the radiation emitted from the receiver at the working temperature becomes the main mechanism of thermal losses depending on the size of the receiver surface and temperature. In order to increase the receiver efficiency, the solar energy must be introduced into the receiver at higher concentrations. To reach high concentrations at the receiver aperture it is not sufficient to improve the performance parameters of the primary concentrator (i.e. the field of heliostats), but a secondary concentration is often required. In this context, the receiver coupled with its secondary concentrator (receiver concentrator, RC) becomes a combined unit. Introducing a secondary concentrator has a substantial effect on the optimal shape, size and arrangement of the primary concentrator. The secondary concentrator intercepts most of the energy directed to it by the heliostats and concentrates it further, in order to meet the level required by the specific process, as shown for example in "Optimum layout of heliostat field when the tower-top receiver is provided with secondary concentrators" (A. Segal, 2012). However, introducing additional optical devices involves, in practice, additional energy losses due to thermal/optical effects such as absorption, rejection, reradiation, convection and spillage at the surfaces of the secondary concentrators. The presence of secondary concentrators generates added complexity to the design of the tower solar plant. Document US2011232629 discloses a symmetric solar receiver.

Document FR 2438804 A1 relates to a solar central receiver or steam generating and superheating unit comprising a first and a second series of circularly disposed tube panels. The first series includes steam superheating tube panels and the second series includes steam generating tube panels. The second steam generating tube panels are interposed between at least some of the first steam superheating panels and the solar heat source. This is aimed to provide an adequate margin of reserve for transient upsets due to diurnal cycles and cloud shadowing.

The present invention is presented as a technical solution to the aforementioned problems, through a novel design of solar tower receiver which improves known systems and addresses their associated problems by means of including an asymmetric surface which allows reducing thermal losses and increases the efficiency of the concentration system. Through the use of the receiver of the invention, novel north-south configurations of the heliostat field can also be achieved, thus improving the general arrangement conditions of the known tower solar plants.

### SUMMARY OF THE INVENTION

The invention provides a solution for the problems described in the previous section, by means of an asymmetric solar receiver with variable geometry, with different panel heights. By reducing the height of some of the solar receiver panels (or modules), the emitting surface of the receiver is reduced, and so, radiation thermal losses due to the high temperature of the heated surface are also reduced, increasing the receiver efficiency.

Also, thanks to the improved surface distribution of the asymmetric solar receiver, the north-south configuration of the heliostat field can be further optimized, typically for heliostats of optical qualities equal or better than 1 mrad. In these cases and for solar fields in the northern hemisphere, the panels with smaller height in the receiver will be located at the south regions of the tower, so that the use of highly focused heliostats (due to their improved optical qualities) can lead to higher energy concentration in a smaller surface of the receiver. Thus, the overall energy flux in the south region can be highly improved. At the same time, a higher number of heliostats can be located at the north region of the field compared to standard configurations of symmetrical receivers, thereby further optimizing the energy yield of the solar field.

It should be noted that current tower solar plants already take advantage of an asymmetric north-south distribution of the heliostat field, since the cosine factor affects differently north and south regions of the solar field. Therefore, normally the north region (in the northern hemisphere) comprises a larger number of heliostats than the south region for optimal energy yield, where the final field distribution is also conditioned by the distance between the heliostats and the receiver. However, none of the prior art proposals combines the known asymmetry, based on the balance between the effects due to the cosine factor and the distance, with also the use of an asymmetric north-south effective surface for the receiver as well. By means of said asymmetric receiver, the asymmetry between north and south regions can be even larger, for further energy field optimization. Advantageously, said receiver is adapted to cover at least an angular region of 180° around a tower and its effective surface density for receiving radiation varies depending on its orientation over the covered angular region thereof.

The receiver comprises at least two panels, wherein at least one of the panels comprises a smaller height than the other panels. More preferably, at least one panel is rectangular, and at least one of the panels is shortened in their upper and/or lower ends compared to the other panels. Height reduction vary between a 5% and a 35% in the shortest panels respect to the longest ones.

In a preferred embodiment of the invention, the receiver comprises a plurality of panels, wherein at least two of the panels are consecutively arranged.

In a preferred embodiment of the invention, the receiver comprises the angular region covered angular region covered by said receiver is at least 270°. More preferably, the angular region covered by said receiver is 360°

A second object of the invention refers to a solar tower comprising at least an asymmetric receiver according to any of the embodiments described in the present document.

A third object of the invention refers to a solar field comprising a solar tower according to any of the embodiments described in the present document, and a plurality of heliostats pointing to the receiver of said tower.

In a preferred embodiment of the invention, the heliostats are arranged so that their solar spots over the receiver are distributed along a plurality of pointing lines. More preferably, the receiver comprises at least one, two, three, four or five pointing lines.

In a preferred embodiment of the invention, the heliostats are arranged in a first group of heliostats at the north of the tower, and a second group of heliostats at the south of the tower.

Regarding the solar field, the standard solar field asymmetry (ratio between the number of heliostats in the north half of the solar field and the number of heliostats in the south half of the solar field, for a solar plant in the north hemisphere and the inverse for a solar plant in the south hemisphere) due to cosine factor is increased between 5 and 25% by means of the invention, and more preferably above 14%. This implies that there will be between 5% and 25% more heliostats, and more preferably above 14% more heliostats, in the predominant solar field half respect the south half, taking advantage of the better cosine factor thereof.

Additionally, in order to allow the solar field to provide improved annual production, the optical quality of the heliostats must be equal or less than 1 mrad. Therefore, the optical quality, understood as root mean square of the angular deviations from the theoretical value, of the reflective surface of the heliostats as a whole must be 1 mrad or better.

Through the present invention, the functional features of the asymmetric receiver of the invention solves the above-referred problems in the prior art of this technology, increasing receiver performance without losing energy input and, hence, lowering the cost of the produced solar energy and increasing the cost effectiveness of the solar thermal plant.

A fourth object of the invention refers to a solar power plant comprising a solar field according to any of the embodiments described in the present document.

A fifth object of the invention refers to a process for installing a solar field according to any of the embodiments described in the present document, comprising installing a solar tower and arranging a plurality of heliostats around said tower, wherein said process comprises at least calculating the distribution of said heliostats over the solar field which maximizes their energy flux performance over the effective surface of the asymmetric receiver.

In a preferred embodiment of the invention, the process can also comprise a step of calculating the surface distribution of the asymmetric receiver which maximizes the energy flux performance over its effective surface.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a schematic view of a central tower power plant.
Figure 2 shows a flat projection of the surface of the solar receiver showing two sun spots in a pointing line and its possible vertical and horizontal pointing corrections. Sun spot (A) shows the standard pointing corrections while the sun spot (B) shows the pointing corrections according to the invention.
Figure 3 and Figure 4 show a flat projection of the surface of a solar receiver with three and five pointing lines, respectively.
Figures 5a and 5b show two schematic views of a known tower solar receiver with cylindrical configuration.
Figure 6 shows the reflected solar energy distribution of a standard solar field on the cylindrical solar receiver (3) of Figs. 5a-5b (flat projection surface). The angular distribution is represented from south to south.
Figures 7a and 7b show two schematic views of a known tower solar receiver with conical configuration.
Figures 8a and 8b show two schematic views of a tower solar receiver with asymmetric configuration according to the present invention.
Figure 9 shows the energy flux distribution obtained with the asymmetric receiver of the invention in a flat projection. The angular distribution is represented from south to south.
Figures 10a-10d show four schematic views of two tower solar receivers with asymmetric configuration according to the present invention.
Figures 11a-11b show a comparison between a symmetrical solar field in the northern hemisphere, where the heliostats are homogeneously distributed around the receiver (Fig. 11a) and a field according to the present invention, where the number of heliostats in the north region is greater than the number of heliostats in the south region around the asymmetric receiver (Fig. 11b). In the figures, (N, S, E, W) denotes north, south, east and west, respectively.

Elements of the example embodiments are consistently denoted by the same reference numerals throughout the drawings and detailed description where appropriate:
(10) Sun
(11) Heliostat
(12) Tower
(13) Solar receiver
(14) Sun spot
(15) Pointing line
(16) Vertical pointing correction
(17) Horizontal pointing correction

### DETAILED DESCRIPTION OF THE INVENTION

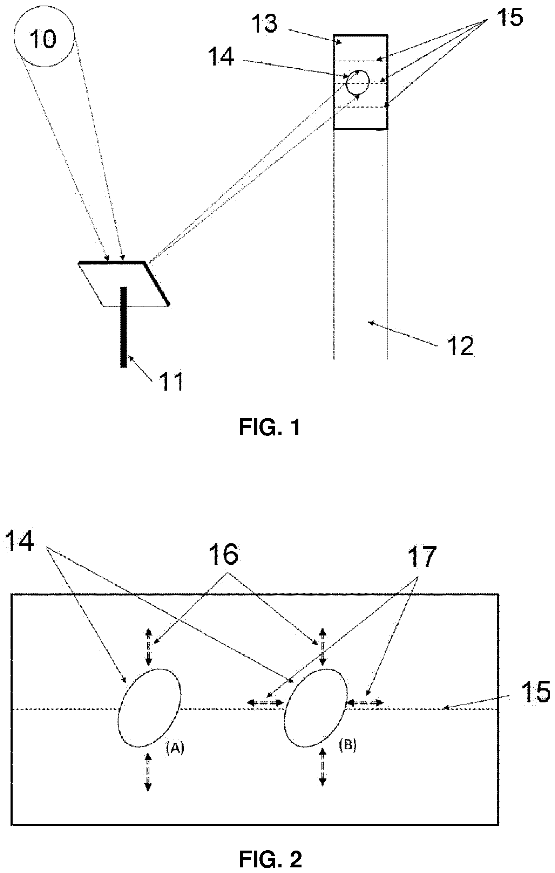

As described in the preceding sections, central tower solar concentration technologies comprise essentially a solar field made up of structures with multiple individual mirror elements, or heliostats (11), normally configuring a large spherical cap or paraboloid, at the focus of which a fixed receiving element is located. A schematic view of a tower solar concentration system is depicted in Figure 1. By means of its specific configuration, the solar radiation that comes from the sun (10) strikes the reflecting surfaces of the heliostats (11) (which are normally composed by one or more facets), tracking the movement of the sun (10) and concentrating and focusing the sunrays on a tower (12) comprising a solar receiver (13) located at its top end. The receiver (13) thereby absorbs the radiation from the heliostats (11) and transfers it, in the form of thermal energy, to a carrier fluid, referred to as heat transfer fluid, to either be used directly in the corresponding thermal or thermodynamic process, or else to be stored as thermal energy, to be used at a later time.

As a general rule, the heliostats (11) forming the solar field have dual-axis tracking capacity, where the corresponding axes are designated as azimuth axis or axis of rotation, and zenith axis or axis of inclination with respect to the horizontal. The freedom of movement in both axes thereby assures that the radiation reflected strikes the effective surface of the receiver, regardless of the position of the sun. In turn, the aiming of the reflected radiation depends on the relative position of the reflective surface of the heliostats (11) and on the incident radiation, for the purpose of further concentrating radiation in the receiver (13). The reflected solar energy of a single heliostat (11) is usually known as sun spot (14). In this context, a minor angular error in the inclination of the reflective surfaces translates into a corresponding deviation of the reflected beam, which depends on the distance to the receiver (13) and on said angular error. Onwards the joint effect of all the angular errors of the heliostat (11) respect to the nominal values will be referred as heliostat optical quality. In addition, insufficient structural rigidity or excessive clearance entails deviation from the focal point where solar radiation is focused with respect to the region where it is intended to be concentrated at the receiver (13).

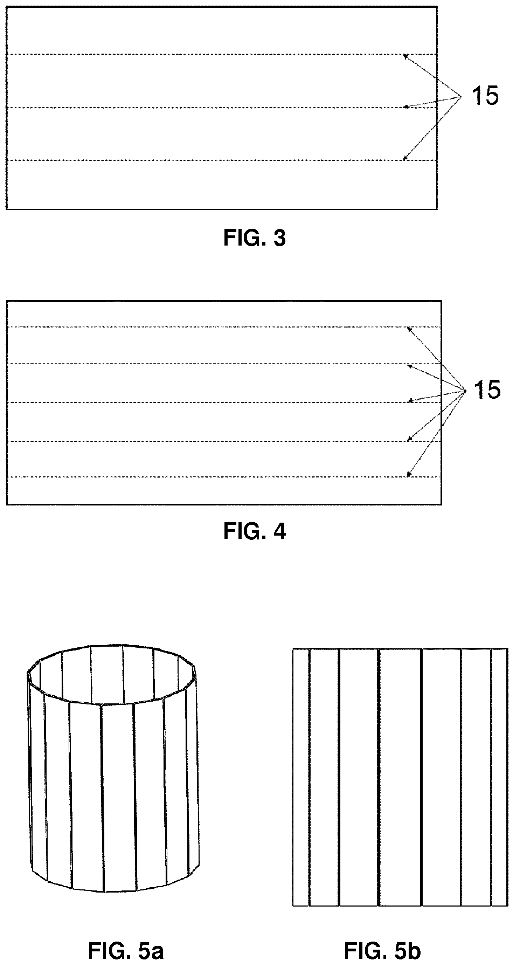

Additionally and in order to obtain further energy increase, the tower solar plants are normally configured with a specific pointing strategy, which means that each heliostat (11) is configured to aim its sun spot (14) to a predefined position on the solar receiver (13). The standard in current commercial tower solar plants is to define one or several pointing lines (15) where the sun spots (14) are to be positioned (see Figure 2 for instance, where two sun spots (14) are shown over a single pointing line (15)). In the ideal scenario, the sun spots (14) can be displaced within the vertical (A) and/or within the horizontal (B) direction to homogenize at much as possible the energy onto the receiver (13), by means of vertical (16) or horizontal (17) pointing corrections, respectively. Note that the increase of the optical quality in current heliostats allows performing said corrections to a certain extent, and this technical advance implies that the surface of the receiver (13) can be taken into consideration in detail for further optical performance. Thus, current receivers (13) can be configured with several pointing lines (15), as shown in Figure 3 (three pointing lines (15)) and in Figure 4 (five pointing lines (15)).

In order to absorb as much energy as possible, multiple heliostats (11) are placed around the tower (12), wherein the solar receiver (13) is preferably a 360° receiver or where, alternatively, it is constrained to a specific angular subregion (for example, substantially equal or greater than 270°, or substantially equal or greater than 180°). It should be noted that the present invention is not preferably related to cavity-type receivers, but to open region receivers (13).

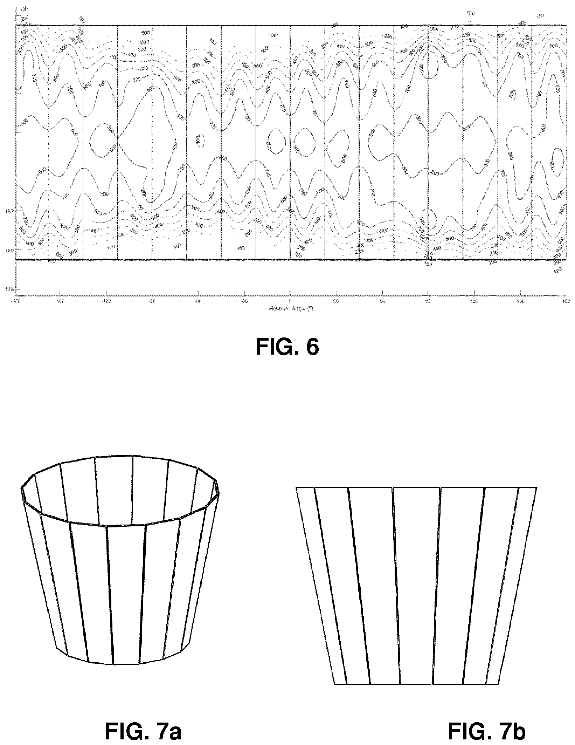

Under this configuration, the main layout of the heliostat field is dictated by the type of central receiver (13) and its opening angle. Cylindrical and, in general, open angular receivers (13) demand surrounding heliostat fields. In this context, to take advantage of heliostats (11) oppositely located to the sun, which have better incidence angles and thereby less energy losses due to cosine effect, these heliostat fields are biased to the north (in northern hemisphere). Two schematic views of a known tower solar receiver (13) with cylindrical configuration is shown in Figs. 5a-5b. The receiver is preferably made of consecutive sections or panels (which are rectangular in this specific example). With this configuration, the reflected solar energy distribution on the solar receiver (13) is represented in Figure 6, which shows maximum energy flux distribution of about 800 W/m² over its central horizontal region. Known alternatives to cylindrical configurations for 360° receivers (13) are, for example, conical configurations such as the one shown in Figures 7a-7b. Even though the use of these receivers (13) can improve the tower solar plant performance over the cylindrical receivers (13) (providing improved focus for the standard plant configuration of the heliostats), it still behaves similarly for the north and south heliostats of the solar field.

In order to provide tower solar plants with novel configurations which are able to optimize the global energy flux performance of the heliostat plant, the present invention proposes a novel receiver (13) configuration based on the asymmetry of its north and south effective surfaces, so that further focusing of the sun sports (14) can be achieved, thus leading to higher energy flux distributions compared to known receivers (13). This kind of receivers (13) will be designated as "asymmetric receivers". In this context, an asymmetric receiver (13) is to be understood as an angular receiver (13) comprising an asymmetric angular distribution. This, in turn, implies that its effective surface density will vary depending on the orientation angle. The term "surface density" will be understood as the surface of the receiver (13) comprised per angular region.

With this asymmetry, regions with smaller surface densities will allow sunspots (14) to undergone smaller energy losses, obtaining increased focusing for heliostats (11) aiming to those regions. This advantage also impacts on the overall energy performance of the whole solar field so that, in order to obtain maximum performance for a given number of heliostats (11), some of them will have to be relocated in the solar field regions aiming to the effective surfaces with greater surface density. This way, the receiver (13) will be able to achieve higher energy flux distributions.

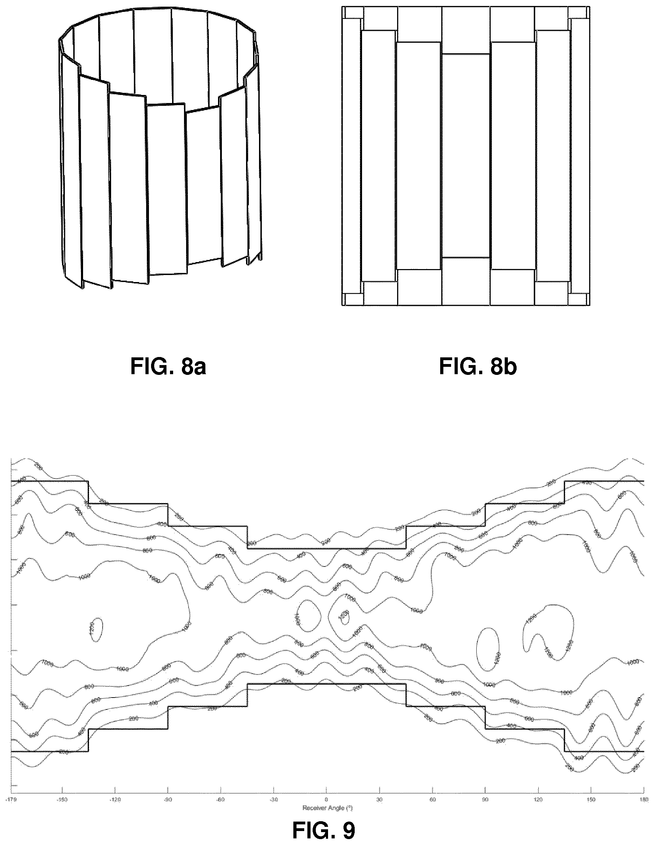

A first embodiment of asymmetric solar receiver (13) according to the invention is depicted in Figure 8a-8b. As shown in the figure, the panels forming the receiver (13) comprise smaller area in one of the regions, where the panels are shortened in their upper and lower ends. Said asymmetric receiver (13) is installed in the tower (12) with its smaller area region oriented towards the south, while its bigger area region is oriented north. Thus, the number of heliostats (11) in the solar field can be rearranged for optimal efficiency compared to the case of a cylindrical receiver (13), so that a number of them will be located in the north field instead of in the south field.

Under this embodiment, the energy flux distribution on the solar receiver (13) according to the invention is represented in Figure 9, which shows maximum reflected energy flux of about 1200 W/m² over its central horizontal region, for the same number of heliostats in the solar field of the example of Figures 5-6. As can be seen in Figure 9, in order to obtain the same energy in the receiver (3), some of the panels or modules thereof can be shortened, and so reducing its cost without losing energy, which is a further advantage of the invention. Moreover, as the energy is more concentrated than in the known receivers (13), there is less surface at high temperature, which in turn leads to lower thermal losses of the receiver (3), thereby increasing its efficiency.

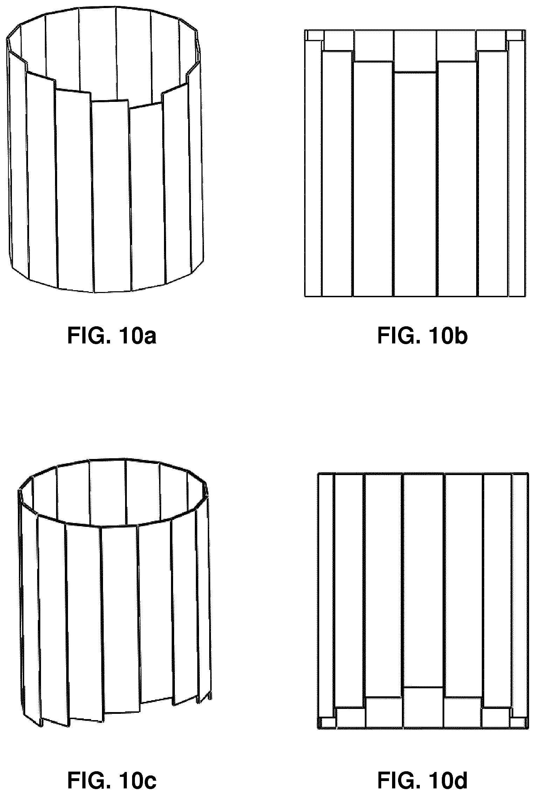

Two further embodiments of the asymmetric solar receiver (13) according to the invention are shown in Figures 10a-10b and Figures 10c-10d, respectively. As depicted in the figures, the panels forming the receiver (13) comprise a smaller area in one of the regions, where the panels are shortened in their upper (Figures 10a-10b) or in their lower (Figures 10c-10d) ends.

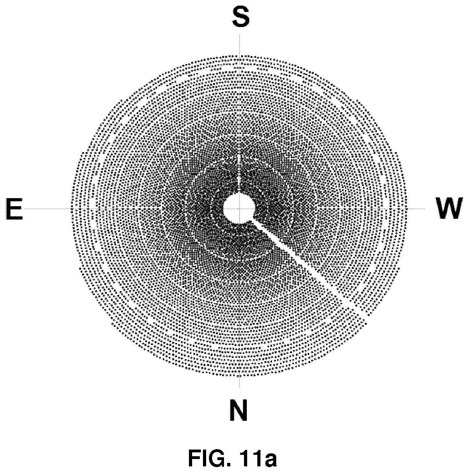

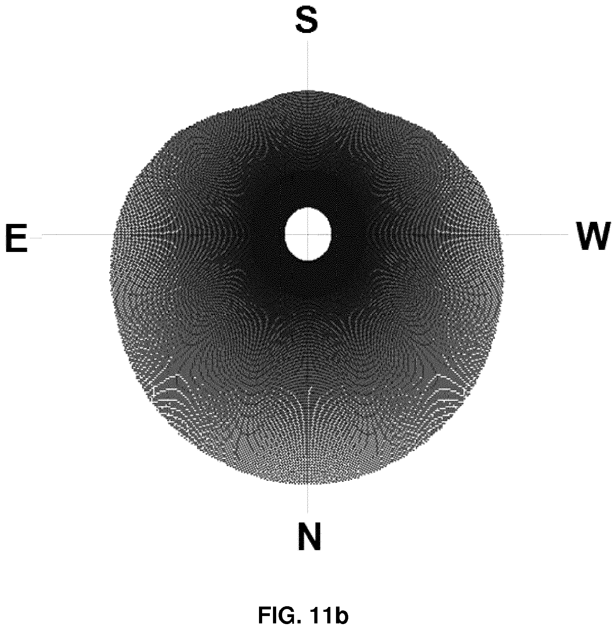

Figures 11a-11b show a comparison between a symmetrical solar field in the northern hemisphere, where the heliostats are homogeneously distributed around the receiver (Figure 11a) and a field according to the present invention, where the number of heliostats in the north region is greater than the number of heliostats in the south region around the asymmetric receiver (Figure 11b). Thanks to the improved surface distribution of the asymmetric solar receiver, the north-south configuration of the heliostat field can be further optimized, typically for heliostats of optical qualities equal or better than 1 mrad. In these cases and for solar fields in the northern hemisphere, the panels with smaller height in the receiver will be located at the south regions of the tower, so that the use of highly focused heliostats (due to their improved optical qualities) can lead to higher energy concentration in a smaller surface of the receiver. Thus, the overall energy flux in the south region can be highly improved. At the same time, a higher number of heliostats can be located at the north region of the field compared to standard configurations of symmetrical receivers, thereby further optimizing the energy yield of the solar field.

The above example embodiments are described in sufficient detail to enable those of ordinary skill in the art to embody and implement the systems and processes herein described. However, it is important to understand that other embodiments of the invention can be provided in many alternate forms and should not be construed as limited to the examples set forth herein.

Accordingly, while embodiment can be modified in various ways and take on various alternative forms, there is no intent to limit to the particular forms disclosed. On the contrary, all modifications, equivalents, and alternatives falling within the scope of the appended claims should be included.

## Claims

1. Asymmetric solar receiver (13) suitable for its installation in heliostat (11) tower solar power plants, said receiver (13) being adapted to cover at least an angular region of 180° around a tower (12), wherein the receiver (13) comprises an effective surface comprising a plurality of panels, wherein one of the panels has a height lower than an adjacent panel, so that the effective surface density of the receiver (13) for receiving radiation varies depending on its orientation over the covered angular region thereof.

2. Asymmetric solar receiver (13) according to the preceding claim, wherein at least one panel is rectangular.

3. Asymmetric solar receiver (13) according to any of the preceding claims, wherein at least one of the panels is shortened in their upper and/or lower ends compared to the other panels.

4. Asymmetric solar receiver (13) according to any of the preceding claims, wherein at least two of the panels are consecutively arranged.

5. Asymmetric solar receiver (13) according to any of the preceding claims, wherein the angular region covered by said receiver (13) is at least 270°

6. Asymmetric solar receiver (13) according to any of the preceding claims, wherein the angular region covered by said receiver (13) is 360°

7. Solar tower (12) comprising at least an asymmetric receiver (13) according to any of the preceding claims.

8. A solar field comprising a solar tower (12) according to the preceding claim, and a plurality of heliostats (11) pointing to the receiver (13) of said tower (12).

9. A solar field according to the preceding claim, wherein the heliostats (11) are arranged so that their solar spots (14) over the receiver (13) are distributed along a plurality of pointing lines (15).

10. A solar field according to the preceding claim, comprising at least one, two, three, four or five pointing lines (15).

11. A solar field according to any the preceding claims, wherein the heliostats (11) are arranged in a first group of heliostats (11) at the north of the tower (13), and a second group of heliostats (11) at the south of the tower (13).

12. A solar power plant comprising a solar field according to any of claims 8-11.

13. A process for installing a solar field according to any of claims 8-11, comprising installing a solar tower (12) and arranging a plurality of heliostats (11) around said tower (12), and wherein said process further comprises at least calculating the distribution of said heliostats (11) over the solar field which maximizes their energy flux performance over the effective surface of the receiver (13).

## Patentansprüche

1. Asymmetrischer Solarempfänger (13), der zu seiner Installation in Solarkraftwerken mit Heliostaten (11) -Turm geeignet ist, wobei der Empfänger (13) ausgelegt ist, mindestens einen Winkelbereich von 180° um einen Turm (12) abzudecken, wobei der Empfänger (13) eine effektive Oberfläche umfasst, die eine Vielzahl von Paneelen umfasst, wobei eines der Paneele eine geringere Höhe als ein benachbartes Paneel aufweist, so dass die effektive Oberflächendichte des Empfängers (13) zum Empfangen von Strahlung in Abhängigkeit von seiner Ausrichtung über den abgedeckten Winkelbereich desselben variiert.

2. Asymmetrischer Solarempfänger (13) nach dem vorhergehenden Anspruch, wobei mindestens ein Paneel rechteckig ist.

3. Asymmetrischer Solarempfänger (13) nach einem der vorhergehenden Ansprüche, wobei mindestens eines der Paneele an seinem oberen und/oder unteren Ende im Vergleich zu den anderen Paneelen verkürzt ist.

4. Asymmetrischer Solarempfänger (13) nach einem der vorhergehenden Ansprüche, wobei mindestens zwei der Paneele aufeinanderfolgend angeordnet sind.

5. Asymmetrischer Solarempfänger (13) nach einem der vorhergehenden Ansprüche, wobei der von dem Empfänger (13) abgedeckte Winkelbereich mindestens 270° beträgt.

6. Asymmetrischer Solarempfänger (13) nach einem der vorhergehenden Ansprüche, wobei der von dem Empfänger (13) abgedeckte Winkelbereich 360° beträgt.

7. Solarturm (12) umfassend mindestens einem asymmetrischen Empfänger (13) nach einem der vorhergehenden Ansprüche.

8. Solarfeld umfassend einen Solarturm (12) nach dem vorhergehenden Anspruch und eine Vielzahl von Heliostaten (11), die auf den Empfänger (13) des Turms (12) zeigen.

9. Solarfeld nach dem vorhergehenden Anspruch, wobei die Heliostaten (11) so angeordnet sind, dass ihre Sonnenflecken (14) über dem Empfänger (13) entlang einer Vielzahl von Zeigelinien (15) verteilt sind.

10. Solarfeld nach dem vorhergehenden Anspruch, umfassend mindestens eine, zwei, drei, vier oder fünf Zeigelinien (15).

11. Solarfeld nach einem der vorhergehenden Ansprüche, wobei die Heliostaten (11) in einer ersten Gruppe von Heliostaten (11) nördlich des Turms (13) und einer zweiten Gruppe von Heliostaten (11) südlich des Turms (13) angeordnet sind.

12. Solarkraftwerk, umfassend ein Solarfeld nach einem der Ansprüche 8 bis 11.

13. Verfahren zum Installieren eines Solarfelds nach einem der Ansprüche 8 bis 11, umfassend das Installieren eines Solarturms (12) und das Anordnen einer Vielzahl von Heliostaten (11) um den Turm (12), und wobei das Verfahren ferner mindestens das Berechnen der Verteilung der Heliostaten (11) über das Solarfeld umfasst, die ihre Energieflussleistung über die effektive Oberfläche des Empfängers (13) maximiert.

## Revendications

1. Récepteur solaire asymétrique (13) apte pour son installation dans des centrales solaires à tour d'héliostat (11), ledit récepteur (13) étant adapté pour couvrir au moins une région angulaire de 180° autour d'une tour (12), dans lequel le récepteur (13) comprend une surface effective comprenant une pluralité de panneaux, dans lequel l'un des panneaux a une hauteur inférieure à celle d'un panneau adjacent, de sorte que la densité de surface effective du récepteur (13) pour recevoir du rayonnement varie en fonction de son orientation sur la région angulaire couverte de celui-ci.

2. Récepteur solaire asymétrique (13) selon la revendication précédente, dans lequel au moins un panneau est rectangulaire.

3. Récepteur solaire asymétrique (13) selon l'une quelconque des revendications précédentes, dans lequel au moins l'un des panneaux est raccourci dans ses extrémités supérieure et/ou inférieure en comparaison avec les autres panneaux.

4. Récepteur solaire asymétrique (13) selon l'une quelconque des revendications précédentes, dans lequel au moins deux des panneaux sont agencés consécutivement.

5. Récepteur solaire asymétrique (13) selon l'une quelconque des revendications précédentes, dans lequel la région angulaire couverte par ledit récepteur (13) est d'au moins 270°.

6. Récepteur solaire asymétrique (13) selon l'une quelconque des revendications précédentes, dans lequel la région angulaire couverte par ledit récepteur (13) est de 360°.

7. Tour solaire (12) comprenant au moins un récepteur asymétrique (13) selon l'une quelconque des revendications précédentes.

8. Champ solaire comprenant une tour solaire (12) selon la revendication précédente et une pluralité d'héliostats (11) pointant vers le récepteur (13) de ladite tour (12).

9. Champ solaire selon la revendication précédente, dans lequel les héliostats (11) sont agencés de sorte que leurs taches solaires (14) au-dessus du récepteur (13) sont réparties le long d'une pluralité de lignes de pointage (15).

10. Champ solaire selon la revendication précédente, comprenant au moins un, deux, trois, quatre ou cinq lignes de pointage (15).

11. Champ solaire selon l'une quelconque des revendications précédentes, dans lequel les héliostats (11) sont agencés en un premier groupe d'héliostats (11) au nord de la tour (13), et un second groupe d'héliostats (11) au sud de la tour (13).

12. Centrale solaire comprenant un champ solaire selon l'une quelconque des revendications 8-11.

13. Procédé d'installation d'un champ solaire selon l'une quelconque des revendications 8-11, comprenant l'installation d'une tour solaire (12) et l'agencement d'une pluralité d'héliostats (11) autour de ladite tour (12), et dans lequel ledit procédé comprend en outre au moins le calcul de la distribution desdits héliostats (11) sur le champ solaire qui maximise la performance de leur flux d'énergie sur la surface effective du récepteur (13).
